# EUROPÄISCHE PATENTANMELDUNG

(11) **EP 4 095 286 A1**
(43) Veröffentlichungstag der Anmeldung: **30.11.2022**
(21) Anmeldenummer: 21175666.3
(22) Anmeldetag: 25.05.2021
(51) Int. Cl.: C25B 1/04, C25B 15/021, C25B 15/08, F25B 30/00, C02F 103/08

(54) **ANORDNUNG UND VERFAHREN ZUR UMWELTFREUNDLICHEN ERZEUGUNG VON WASSERSTOFF**

(71) Anmelder: Siemens Energy Global GmbH & Co. KG, 81739 München (DE)
(72) Erfinder: Achter, Thomas, 91301 Forchheim (DE)

(57) **Zusammenfassung**

Es wird eine Anordnung 1 zur umweltfreundlichen Erzeugung von Wasserstoff 2 angegeben. Die Anordnung weist auf: eine Elektrolyseeinrichtung 4, ausgebildet zur Erzeugung von Wasserstoff 2 mittels Elektrolyse von Wasser 5, einen Kühlmediumkreislauf 6, ausgebildet zur Kühlung der Elektrolyseeinrichtung 4, und eine Hochtemperaturwärmepumpe 7, ausgebildet zur Aufnahme von Wärmeenergie von einem im Kühlmediumkreislauf 6 strömenden Kühlmedium 8a, 8b und Abgabe von Wärmeenergie an ein Heizmedium 9a, 9b.

Daneben wird ein Verfahren zur umweltfreundlichen Erzeugung von Wasserstoff 2 angegeben.

## Beschreibung

Die Erfindung betrifft eine Anordnung sowie ein Verfahren zur umweltfreundlichen Erzeugung von Wasserstoff.

Wasserstoff als Energieträger erlangt zunehmend an Bedeutung. Eine Möglichkeit der Wasserstoffgewinnung bietet hierbei die Elektrolyse, wie beispielsweise aus der EP 3 489 394 A1 hervorgeht. Der dafür benötigte Elektroenergiebedarf kann vorteilhaft mittels regenerativer Stromquellen, wie z. B. Solarenergie, Windenergie, etc., gedeckt werden.

Allerdings wird während der Elektrolyse ein erheblicher Anteil der zugeführten Elektroenergie in Wärmeenergie umgewandelt, die bisher ungenutzt als Abwärme an die Umgebung abgegeben wird. Mit anderen Worten ist der Nutzungsgrad der zugeführten Energie schlecht. Mit zunehmender Lebensdauer der Elektrolyseanlage kann sich der Nutzungsgrad zudem weiter verschlechtern.

Ein weiteres Problem ergibt sich aus dem erforderlichen Kühlbedarf der Elektrolyseanlage, um die Abwärme abführen zu können. Hierfür bietet sich eine Wasser- und/oder Luftkühlung an. Allerdings ist es insbesondere in geographischen Gebieten mit erhöhter Umgebungstemperatur von bis zu 55 °C oder noch höher aufwändig, die bei einer Wasserkühlung erforderliche Vorlauftemperatur von ca. 30 °C bis 40 °C in einem Kühlwasserkreislauf zu erreichen und bei einer Luftkühlung die für die erforderliche Kühlung notwendige Oberfläche für die Wärmeübertragung zur Verfügung zu stellen. Je nach konkreten Bedingungen kann für die Kühlung der Einsatz einer kosten- und energieintensiven Kompressionskälteanlage notwendig sein. Die Kühlung stellt daher einen erheblichen Kostenfaktor bei der Herstellung und dem Betrieb einer Elektrolyseanlage zur Wasserstoffgewinnung dar.

Vor diesem Hintergrund ist es Aufgabe der Erfindung, eine Anordnung sowie ein Verfahren zur Erzeugung von Wasserstoff zur Verfügung zu stellen, mit denen die vorstehend genannten Probleme verringert oder sogar gänzlich vermieden werden können.

Gelöst wird diese Aufgabe durch die Gegenstände der unabhängigen Ansprüche. Die abhängigen Ansprüche betreffen bevorzugte Ausgestaltungen der erfindungsgemäßen Lösungen.

Ein erster Aspekt der Erfindung betrifft eine Anordnung zur umweltfreundlichen Erzeugung von Wasserstoff. Die Anordnung weist eine Elektrolyseeinrichtung, ausgebildet zur Erzeugung von Wasserstoff mittels Elektrolyse von Wasser, einen Kühlmediumkreislauf, ausgebildet zur Kühlung der Elektrolyseeinrichtung, und eine Hochtemperaturwärmepumpe, ausgebildet zur Aufnahme von Wärmeenergie von einem im Kühlmediumkreislauf strömenden Kühlmedium und Abgabe von Wärmeenergie an ein Heizmedium, auf.

Der Begriff Elektrolyse bezeichnet ein Verfahren, bei dem elektrische Energie zumindest teilweise in chemische Energie umgewandelt wird, indem mittels elektrischen Stroms eine chemische Reaktion ausgelöst wird. Die benötigte elektrische Energie wird durch eine Gleichspannungsquelle mit zwei elektrischen Polen bereitgestellt. Durch Anordnung von zwei, mit den beiden Polen verbundenen Elektroden, der Anode und der Kathode, in einem elektrisch leitfähigen Elektrolyten wird durch diesen Elektrolyten ein elektrischer Gleichstrom geleitet.

Während der Elektrolyse kommt es zu einem Elektronenmangel an der mit dem Pluspol verbundenen Anode und einen Elektronenüberschuss an der mit dem Minuspol verbundenen Kathode. Dies führt zu einer Reduktion von im Elektrolyten vorhandenen Teilchen an der Kathode und einer Oxidation an der Anode.

Zur Erzeugung von Wasserstoff wird erfindungsgemäß die Elektrolyse von Wasser genutzt. Zur Verbesserung der elektrischen Leitfähigkeit können dem Wasser Zusatzstoffe, wie z. B. Säuren, Basen oder Salze, hinzugefügt sein. Während der Elektrolyse wird an der Anode molekularer Sauerstoff durch Oxidation und an der Kathode molekularer Wasserstoff durch Reduktion gebildet.

Für die konkrete Ausgestaltung der Elektrolyseeinrichtung bestehen verschiedene Möglichkeiten. Eine dieser Möglichkeiten ist die Ausbildung der Elektrolyseeinrichtung als Niederdruck-Protonen-Austausch-Elektrolyseeinrichtung (PEM-Elektrolyseeinrichtung, PEM engl. Proton Exchange Membrane). Eine solche PEM-Elektrolyseeinrichtung weist eine Protonen-Austausch-Membran auf, die für positiv geladene Teilchen durchlässig ist. Diese Membran sorgt für eine Trennung der Produktgase Wasserstoff und Sauerstoff, die elektrische Isolierung der Elektroden sowie die Leitung der Wasserstoffionen als positiv geladene Teilchen. Vorteilhaft führt die Membran zu einer geringen Gasübertragungsrate und folglich einer hohen Reinheit der Elektrolyseprodukte Wasserstoff und Sauerstoff. Dies erhöht die Lagersicherheit der beiden Gase.

Alternativ kann die Elektrolyse beispielsweise auch mittels eines alkalischen Elektrolyseurs als Elektrolyseeinrichtung ausgeführt werden.

Wie bereits einleitend erläutert, wird bei der Elektrolyse ein Teil der eingebrachten elektrischen Energie in Wärmeenergie umgewandelt, was eine Kühlung der Elektrolyseeinrichtung erforderlich macht. Erfindungsgemäß weist die Anordnung daher einen Kühlmediumkreislauf zur Kühlung der Elektrolyseeinrichtung auf, d. h. es kann eine Wärmeübertragung zwischen der Elektrolyseeinrichtung und dem im Kühlmediumkreislauf strömenden Kühlmedium erfolgen. Zur Ausbildung der Strömung des Kühlmediums im Kühlmediumkreislauf kann eine Pumpeinrichtung vorhanden sein.

Der Kühlmediumkreislauf kann beispielsweise als Kühlwasserkreislauf ausgebildet sein, d. h. als Kühlmedium kann Wasser genutzt werden. Wasser als Kühlmedium zeichnet sich durch eine hohe Verfügbarkeit, gute Wärmekapazität und sehr gute Umweltverträglichkeit aus.

Weiterhin weist die vorgeschlagene Anordnung eine Hochtemperaturwärmepumpe auf. Die Hochtemperaturwärmepumpe ist zur Aufnahme von Wärmeenergie aus dem Kühlmedium und Abgabe von Wärmeenergie an ein Heizmedium ausgebildet. Das Heizmedium kann beispielsweise Wasser verschiedener Qualitäten, z. B. von Deionat bis Salzwasser, oder Öl sein.

Der Begriff Wärmepumpe bezeichnet vorliegend eine Maschine, welche unter Aufwendung von technischer Arbeit Wärmeenergie bzw. thermische Energie aus einem Medium mit niedrigerer Temperatur aufnimmt und zusammen mit der Antriebsenergie auf ein zu erwärmendes Medium höherer Temperatur überträgt. Bezogen auf die vorliegende Erfindung entspricht das Kühlmedium dem Medium mit niedrigerer Temperatur und das Heizmedium dem Medium höherer Temperatur. Mit anderen Worten wird mittels der Wärmepumpe Wärmeenergie aus dem Kühlmedium auf das Heizmedium übertragen, wobei sich die Temperatur des Kühlmediums verringert und die Temperatur des Heizmediums erhöht.

Zur Realisierung dieser Wärmeübertragung nutzt die Wärmepumpe ein Arbeitsmedium, welches in der Wärmepumpe im Kreislauf geführt wird. Durch Komprimierung mittels eines Verdichters wird der Druck des Arbeitsmediums im gasförmigen Aggregatzustand erhöht, wobei sich das Arbeitsmedium erwärmt. Das erwärmte gasförmige Arbeitsmedium überträgt in einem Kondensator Wärmeenergie auf das Heizmedium und kühlt sich dabei ab, wobei es vom gasförmigen in den flüssigen Aggregatzustand übergeht. Durch nachfolgende Ausdehnung des Arbeitsmediums mittels eines Expansionsventils wird der Druck des flüssigen Arbeitsmediums wieder verringert, wodurch seine Siedetemperatur sinkt. Das abgekühlte flüssige Arbeitsmedium mit niedrigem Druck kann nun in einem Verdampfer Wärmeenergie vom Kühlmedium aufnehmen. Dabei geht das Arbeitsmedium vom flüssigen in den gasförmigen Aggregatzustand über und kann anschließend mittels des Verdichters erneut komprimiert werden.

Der Begriff Hochtemperaturwärmepumpe bezeichnet eine besondere Ausgestaltung einer Wärmepumpe, die auf einem hohen Temperaturniveau arbeitet, d. h. es wird Wärmeenergie auf ein Medium übertragen, das bereits eine hohe Temperatur aufweist. Unter einem hohen Temperaturniveau bzw. hohen Temperaturen sind beispielsweise Temperaturen über 70 °C, vorzugsweise über 80 °C zu verstehen.

Für eine solche Hochtemperaturwärmepumpe sind u. a. Hydrofluorether oder Fluorketone als Arbeitsmedium geeignet, wie in DE 10 2011 086 476 A1 näher beschrieben. Zu weiteren Details und Ausführungsvarianten einer für die vorgeschlagene Anordnung nutzbaren Hochtemperaturwärmepumpe wird ebenfalls auf die DE 10 2011 086 476 A1 verwiesen.

Das mittels der Hochtemperaturwärmepumpe erwärmte Heizmedium kann vielfältig eingesetzt werden, beispielsweise zur Wasserentsalzung, wie nachfolgend näher erläutert, oder für andere Verfahren, bei denen eine Zufuhr von Wärmeenergie erforderlich ist, z. B. in chemischen Prozessen, zur Erzeugung von Fernwärme oder zur Nutzung in anderen Anwendungen.

Die erfindungsgemäße Anordnung ermöglicht vorteilhaft eine effizientere Nutzung der für die elektrolytische Erzeugung von Wasserstoff eingesetzten elektrischen Energie, indem bei der Elektrolyse entstehende Wärmeenergie mittels einer Hochtemperaturwärmepumpe für Folgeprozesse nutzbar gemacht wird. Durch den Einsatz der Hochtemperaturwärmepumpe kann zudem eine ausreichende Kühlung der Elektrolyseeinrichtung auch in geographischen Gebieten mit hoher Umgebungstemperatur ermöglicht werden. Kostenintensive Kompressionskälteanlagen werden folglich nicht benötigt.

Gemäß verschiedenen Ausführungsvarianten kann die Anordnung eine regenerative Stromerzeugungseinrichtung aufweisen, die zur Versorgung der Elektrolyseeinrichtung mit regenerativer elektrischer Energie ausgebildet ist.

Mit anderen Worten kann die regenerative Stromerzeugungseinrichtung regenerative bzw. erneuerbare Energiequellen, wie z. B. Windenergie und/oder Solarenergie, nutzen, um die für das Betreiben der Elektrolyseeinrichtung benötigte elektrische Energie bereitzustellen. Hierfür sind die regenerative Stromerzeugungseinrichtung und die Elektrolyseeinrichtung elektrisch leitend miteinander verbunden.

Die Verwendung regenerativer Energiequellen verbessert die CO₂-Bilanz der Wasserstoffherstellung, d. h. die Emission von Kohlenstoffdioxid wird verringert oder kann sogar vollständig vermieden werden. Zudem ermöglicht sie eine Erzeugung von Wasserstoff unabhängig vom Vorhandensein fossiler Energieträger. Dadurch kann die Erzeugung von Wasserstoff auch in geographischen Gebieten ohne Zugang zu fossilen Energieträgern ermöglicht werden.

Optional kann die regenerative Stromversorgungseinrichtung zur Versorgung der Hochtemperaturwärmepumpe mit regenerativer elektrischer Energie ausgebildet sein. Mit anderen Worten kann die für das Betreiben des Verdichters der Hochtemperaturwärmepumpe benötigte elektrische Energie ebenfalls aus regenerativen Energiequellen bereitgestellt werden. Dadurch kann die CO₂-Bilanz weiter verbessert werden, da mit der Verwendung von elektrischer Energie aus regenerativen Energiequellen keine CO₂-Emission verbunden ist.

Weiter optional kann die regenerative Stromversorgungseinrichtung mit einem Stromspeicher verbunden sein, der zur Speicherung überschüssiger elektrischer Energie, die von der regenerativen Stromversorgungseinrichtung erzeugt wurde, ausgebildet ist. Die Elektrolyseeinrichtung und/oder die Hochtemperaturwärmepumpe können in diesem Fall direkt oder indirekt nach Zwischenspeicherung im Stromspeicher mit regenerativer elektrischer Energie versorgt werden. Dies kann vorteilhaft eine Versorgung der Elektrolyseeinrichtung und/oder die Hochtemperaturwärmepumpe mit regenerativer elektrischer Energie auch bei fluktuierender regenerativer Stromerzeugung, z. b. nachts oder bei Windstille, ermöglichen.

Gemäß weiteren Ausführungsvarianten kann die Anordnung eine Wasserentsalzungseinrichtung aufweisen, die zur Bereitstellung von Süßwasser durch Entsalzung von salzhaltigem Wasser, z. B. Meerwasser, unter Energiezufuhr mittels des erwärmten Heizmediums ausgebildet ist.

Der Begriff Süßwasser bezeichnet vorliegend Wasser ohne oder mit einer sehr geringen Menge an Salzen, d. h. mit einer Salinität unter 0,1 Masseprozent.

Die Wasserentsalzungseinrichtung kann beispielsweise als Einrichtung zur mehrstufigen Entspannungsverdampfung ausgebildet sein, in der salzhaltiges Wasser mittels des erwärmten Heizmediums auf eine Temperatur von ungefähr 115 °C erwärmt wird. Anschließend erfolgt eine destillative Trennung von Wasser und Salz in mehreren Stufen.

Durch Verwendung des erwärmten Heizmediums für die Wasserentsalzung kann der sonstige Energiebedarf für die Wasserentsalzung, der zumeist mittels fossiler Energieträger gedeckt wird, verringert oder sogar eliminiert werden. Folglich kann die CO₂-Bilanz der Wasserentsalzung verbessert oder sogar auf null gesetzt werden.

Mit der gemeinsamen Anordnung von Elektrolyseeinrichtung und Wasserentsalzungseinrichtung ist vorteilhaft eine im Vergleich zur herkömmlichen separaten Anordnung geringere Kohlenstoffdioxidemission verbunden. Bei Nutzung einer Energieversorgungseinrichtung zur Energieversorgung mit regenerativer elektrischer Energie ist sogar ein CO₂-neutraler Betrieb möglich. Das erzeugte Süßwasser kann zudem als zusätzliche Einnahmequelle zu einer verbesserten Wirtschaftlichkeit der vorgeschlagenen Anordnung beitragen.

Mittels der Wasserentsalzungseinrichtung bereitgestelltes Süßwasser kann beispielsweise in ein Trinkwassernetz eingespeist oder zur Bewässerung von Anpflanzungen, wie z. B. Bäumen, Sträuchern, Nutzpflanzen, verwendet werden. Dadurch kann sich sogar eine negative CO₂-Bilanz ergeben, d. h. es wird mehr Kohlenstoffdioxid durch die bewässerten Anpflanzungen verbraucht, als durch den Betrieb der erfindungsgemäßen Anordnung freigesetzt wird.

Insbesondere besteht die Möglichkeit der Bewässerung von Anpflanzungen in an einem Meer oder sonstigen salzhaltigen Gewässern gelegenen Halbwüsten- oder Wüstenregionen, wie z. B. in Küstengebieten der arabischen Halbinsel, der Namib-Wüste in Namibia, Küstengebieten Pakistans sowie in Gegenden mit entsprechenden geographischen Gegebenheiten. Dadurch kann der Erwärmung des Erdklimas entgegengewirkt werden. Zudem können neue landwirtschaftliche Nutzgebiete erschlossen werden. Vorteilhaft wirkt sich dabei aus, dass in den genannten Gebieten Solarenergie in ausreichendem Maße für einen wirtschaftlichen Betrieb der Anordnung zur Verfügung steht.

Optional besteht die Möglichkeit, das mittels der Wasserentsalzungseinrichtung bereitgestellte Süßwasser zumindest teilweise der Elektrolyseeinrichtung für die Elektrolyse von Wasser zuzuführen.

Dadurch kann ein weiteres Anwendungsgebiet für das erzeugte Süßwasser erschlossen werden. Bei räumlich naher Anordnung von Elektrolyseeinrichtung und Wasserentsalzungseinrichtung können zudem ein weiter Transport von Süßwasser zur Elektrolyseeinrichtung sowie eine Belastung des Trinkwassernetzes entbehrlich sein.

Ein weiterer Aspekt der Erfindung betrifft ein Verfahren zur umweltfreundlichen Erzeugung von Wasserstoff. Das Verfahren weist auf: Erzeugen von Wasserstoff mittels Elektrolyse von Wasser, Erwärmen eines Kühlmediums mittels bei der Elektrolyse abgegebener Wärmeenergie und Erwärmen eines Heizmediums auf eine Temperatur oberhalb der Temperatur des erwärmten Kühlmediums mittels Energieübertragung vom erwärmten Kühlmedium auf das Heizmedium.

Vorzugsweise können die genannten Verfahrensschritte zeitlich parallel zueinander ausgeführt werden. Das erfindungsgemäße Verfahren kann beispielsweise mittels der vorstehend beschriebenen Anordnung zur umweltfreundlichen Erzeugung von Wasserstoff durchgeführt werden. Insofern dienen die obigen Ausführungen zur Erläuterung der erfindungsgemäßen Anordnung auch zur Beschreibung des erfindungsgemäßen Verfahrens. Mit dem erfindungsgemäßen Verfahren sind die Vorteile der erfindungsgemäßen Anordnung entsprechend verbunden.

Gemäß verschiedenen Ausführungsvarianten kann für die Elektrolyse regenerative elektrische Energie verwendet werden.

Gemäß weiteren Ausführungsvarianten kann das Verfahren ein Bereitstellen von Süßwasser durch Entsalzen von salzhaltigem Wasser, z. B. Meerwasser, unter Energiezufuhr mittels des erwärmten Heizmediums aufweisen. Das bereitgestellte Süßwasser kann optional zumindest teilweise für das Erzeugen von Wasserstoff mittels Elektrolyse von Wasser verwendet werden.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Es zeigen:
- Fig. 1: eine schematische Darstellung einer beispielhaften Anordnung zur umweltfreundlichen Erzeugung von Wasserstoff; und
- Fig. 2: ein Ablaufschema eines beispielhaften Verfahrens zur umweltfreundlichen Erzeugung von Wasserstoff.

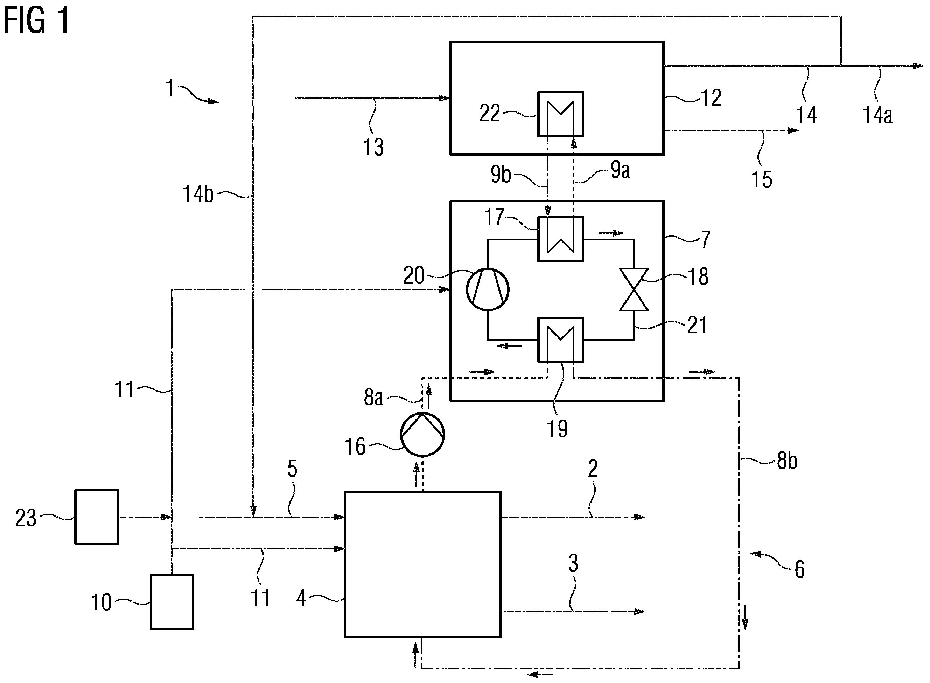

Figur 1 zeigt ein Ausführungsbeispiel einer beispielhaften Anordnung 1 zur umweltfreundlichen Erzeugung von Wasserstoff 2. Die Anordnung 1 weist eine Elektrolyseeinrichtung 4, einen Kühlmediumkreislauf 6, eine Hochtemperaturwärmepumpe 7, eine regenerative Stromerzeugungseinrichtung 10 und eine Wasserentsalzungseinrichtung 12 auf. Zur Glättung der oft fluktuierenden regenerativen Stromerzeugung kann optional ein Stromspeicher 23, z. B. eine wiederaufladbare Batterie, vorgesehen sein.

Die Elektrolyseeinrichtung 4 ist beispielsweise als Niederdruck-Protonen-Austausch-Elektrolyseeinrichtung zur Elektrolyse von Wasser 5 ausgebildet. Hierfür wird der Elektrolyseeinrichtung 4 Wasser 5 zugeführt, welches elektrolytisch umgesetzt wird. Die Reaktionsprodukte der Elektrolysereaktion Wasserstoff 2, gesättigt mit Wasserdampf, und Sauerstoff 3, gesättigt mit Wasserdampf, verlassen die Elektrolyseeinrichtung 4. Der erzeugte Wasserstoff 2 kann beispielsweise als Energieträger und/oder als Edukt für chemische Reaktionen genutzt werden.

Zur Durchführung der Elektrolyse wird der Elektrolyseeinrichtung 4 regenerative elektrische Energie 11 zugeführt, die von der regenerativen Stromerzeugungseinrichtung 10 erzeugt und der Elektrolyseeinrichtung 4 direkt oder indirekt nach Zwischenspeicherung im optional vorhandenen Stromspeicher 23 zugeführt wird. Die regenerative Stromerzeugungseinrichtung 10 kann beispielsweise als Windkraftanlage oder Solarkraftanlage ausgebildet sein. Auch eine Kombination beider Technologien ist möglich.

Da während der Elektrolyse elektrische Energie nicht nur in chemische Energie, sondern auch in thermische Energie umgewandelt wird, ist eine Kühlung der Elektrolyseeinrichtung 4 erforderlich. Hierfür wird der Kühlmediumkreislauf 6 genutzt, der im Ausführungsbeispiel als Kühlwasserkreislauf ausgebildet ist, d. h. als Kühlmedium 8a, 8b dient Wasser.

Der Kühlmediumkreislauf 6 umfasst Rohrleitungen zur Aufnahme des Kühlmediums 8a, 8b. Im Kühlmediumkreislauf 6 ist eine Pumpeinrichtung 16 angeordnet, die der Ausbildung einer Strömung des Kühlmediums 8a, 8b in den Rohrleitungen des Kühlmediumkreislaufs 6 dient. In dem in Figur 1 dargestellten Ausführungsbeispiel ist die Pumpeinrichtung 16 stromabwärts der Elektrolyseeinrichtung 7 und stromaufwärts der Hochtemperaturwärmepumpe 7, jedoch ist auch eine anderweitige Positionierung der Pumpeinrichtung 16 im Kühlmediumkreislauf 6 möglich, beispielsweise unmittelbar stromaufwärts der Elektrolyseeinrichtung 4.

Zur Kühlung der Elektrolyseeinrichtung 4 wird Kühlmedium 8b mit niedriger Temperatur (Strich-Punkt-Linie), z. B. ca. 35°C, zur Elektrolyseeinrichtung 4 geleitet, wo es von der Elektrolyseeinrichtung 4 in Form von Abwärme abgegebene Wärmeenergie aufnimmt. Hierdurch kommt es zur Temperaturerhöhung des Kühlmediums 8b, z. B. auf eine Temperatur von ca. 45 °C. Das Kühlmedium 8a mit hoher Temperatur (gepunktete Linie) strömt nach Verlassen der Elektrolyseeinrichtung 4 in die Hochtemperaturwärmepumpe 7. Neben der Elektrolyseeinrichtung 4 steht auch die Hochtemperaturwärmepumpe 7 in einer thermischen Wirkverbindung mit dem Kühlmediumkreislauf 6. In der Hochtemperaturwärmepumpe 7 wird Wärme vom Kühlmedium 8a aufgenommen, so dass sich dieses wieder auf die niedrige Temperatur, also z. B. ca. 35 °C, abkühlt. Anschließend kann das Kühlmedium 8b mit niedriger Temperatur erneut zur Kühlung der Elektrolyseeinrichtung 4 genutzt werden.

Nachfolgend wird die Funktionsweise der Hochtemperaturwärmepumpe 7 näher erläutert. Die Hochtemperaturwärmepumpe 7 ist dazu ausgebildet, Wärmeenergie vom Kühlmedium 8a, 8b (Wärmequelle) aufzunehmen und an ein Heizmedium 9a, 9b (Wärmesenke) abzugeben. Hierfür wird ein Arbeitsmedium 21 genutzt, welches in einem Kreislauf geführt wird und dabei verschiedene Druck-, Temperatur- und Aggregatzustände durchläuft. Bei dem im Ausführungsbeispiel genutzten Arbeitsmedium 21 handelt es sich um synthetische Kältemittel, z. B. sogenannte HCFOs (Hydro-chloro-fluoro-olefine), oder natürliche Kältemittel.

Das zunächst flüssige Arbeitsmedium 21 nimmt in einem Verdampfer 19 Wärmeenergie vom Kühlmedium 8a hoher Temperatur auf. Dadurch erwärmt sich das Arbeitsmedium 21 und verdampft, d. h. es geht in den gasförmigen Aggregatzustand über. Das gasförmige Arbeitsmedium 21 gelangt anschließend in den Verdichter 20, in dem es komprimiert wird. Durch diese Komprimierung wird das Arbeitsmedium 21 erwärmt. Das erwärmte Arbeitsmedium 21 strömt in den Kondensator 17. Im Kondensator 17 wird Wärmeenergie von dem Arbeitsmedium 21 auf das Heizmedium 9a, 9b übertragen, wodurch sich das Arbeitsmedium 21 abkühlt und wieder in den flüssigen Aggregatzustand übergeht. Der Druck des flüssigen Arbeitsmediums 21 wird nun beim Durchströmen des Expansionsventils 18 wieder verringert, wodurch seine Siedetemperatur sinkt. Nun kann das Arbeitsmedium 21 erneut Wärmeenergie vom Kühlmedium 8a aufnehmen und verdampfen.

Für den Betrieb des Verdichters 20 wird elektrische Energie benötigt, die im Ausführungsbeispiel ebenfalls in Form regenerativer elektrischer Energie 11 von der regenerativen Stromerzeugungseinrichtung 10 direkt oder indirekt über den Stromspeicher 23 zur Verfügung gestellt wird.

Mittels der Wasserentsalzungseinrichtung 12 wird Süßwasser 14 bereitgestellt. Hierfür wird der Wasserentsalzungseinrichtung 12 salzhaltiges Wasser 13, z. B. Meerwasser, zugeführt. Durch mehrstufige Entspannungsverdampfung wird das im salzhaltigen Wasser 13 enthaltene Salz abgetrennt. Der entstehende Brüden 15 sowie das Süßwasser 14 verlassen die Wasserentsalzungseinrichtung 12.

Für die Verdampfung benötigt die Wasserentsalzungseinrichtung 12 Wärmeenergie. Hierfür wird das Heizmedium 9a, 9b genutzt, welches im Kreislauf geführt wird. Das Heizmedium 9b niedriger Temperatur (Strich-Punkt-Linie), z. B. ca. 80 °C wird wie vorstehend beschrieben mittels der Hochtemperaturwärmepumpe 7 erwärmt. Das Heizmedium 9a hoher Temperatur (gestrichelte Linie), z. B. ca. 120 °C, strömt in einen Wärmeüberträger 22 der Wasserentsalzungseinrichtung 12, gibt in diesem Wärmeenergie ab, die für das Verdampfen genutzt wird, und strömt anschließend als Heizmedium 9b niedriger Temperatur wieder in die Hochtemperaturwärmepumpe 7.

Das mittels der Wasserentsalzungseinrichtung 12 bereitgestellte Süßwasser 14 kann zum Bewässern von Anpflanzungen genutzt und/oder in ein Trinkwassernetz eingespeist werden (Süßwasser 14a). Zumindest ein Teil des Süßwassers (Süßwasser 14b) kann der Elektrolyseeinrichtung 4 zugeführt werden, so dass daraus Wasserstoff 2 elektrolytisch erzeugt werden kann.

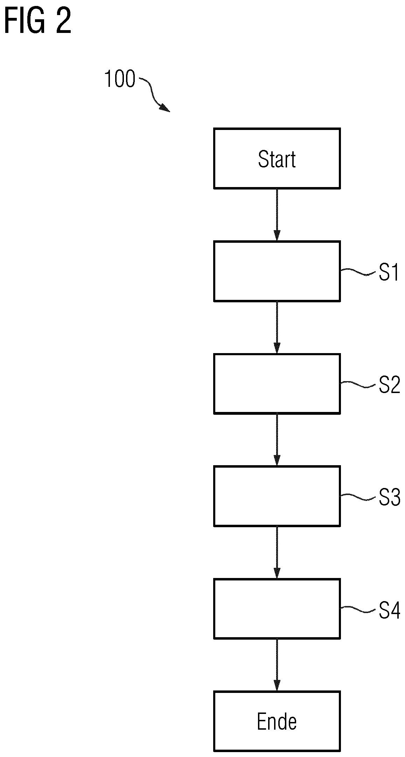

Nachfolgend wird unter Bezugnahme auf Figur 2 ein beispielhaftes Verfahren 100 zur umweltfreundlichen Erzeugung von Wasserstoff 2 näher erläutert. Das Verfahren 100 wird mittels der vorstehend unter Bezugnahme auf Figur 1 erläuterten Anordnung 1 ausgeführt. Insofern wird auf die obigen Erläuterungen ergänzend verwiesen.

Nach dem Start des Verfahrens 100 wird im ersten Verfahrensschritt S1 Wasserstoff 2 mittels Elektrolyse von Wasser 5 erzeugt. Zudem entsteht bei der Elektrolyse des Wassers 5 Sauerstoff. Dies erfolgt in der Elektrolyseeinrichtung 4 der Anordnung 1 unter Verwendung regenerativer elektrischer Energie 11, die mittels der regenerativen Stromerzeugungseinrichtung 10 direkt oder indirekt über den Stromspeicher 23 bereitgestellt wird. Während der Elektrolyse im Verfahrensschritt S1 wird gleichzeitig im Verfahrensschritt S2 ein Kühlmedium 8b niedriger Temperatur, im Ausführungsbeispiel Wasser mit einer Temperatur von ca. 35 °C, mittels bei der Elektrolyse abgegebener Wärmeenergie erwärmt. Hierzu strömt das Kühlmedium 8a, 8b in dem Kühlmediumkreislauf 6.

Mittels des nunmehr erwärmten Kühlmediums 8a mit einer Temperatur von ca. 45 °C wird im Verfahrensschritt S3 ein Heizmedium 9b niedriger Temperatur, z. B. 80 °C, erwärmt, und zwar auf eine Temperatur oberhalb der Temperatur des erwärmten Kühlmediums 8a, z. B. auf 120 °C. Dies erfolgt unter Energieübertragung vom erwärmten Kühlmedium 8a auf das Heizmedium 9b niedriger Temperatur mittels der Hochtemperaturwärmepumpe 7.

Im Verfahrensschritt S4 wird das Heizmedium 9a hoher Temperatur zur Entsalzung von salzhaltigem Wasser 13, z. B. Meerwasser, in der Wasserentsalzungseinrichtung 12 genutzt. Mit anderen Worten wird Süßwasser 14, 14a, 14b bereitgestellt, indem salzhaltiges Wasser 13 unter Energiezufuhr mittels des erwärmten Heizmediums 9a erwärmt und durch destillative Abtrennung des Salzes entsalzt wird. Das derart bereitgestellte Süßwasser 14, 14a, 14b kann optional zumindest teilweise der Elektrolyseeinrichtung 4 zugeführt und als Edukt bei der Elektrolyse zur Erzeugung von Wasserstoff 2 genutzt werden.

Im Ausführungsbeispiel werden die Verfahrensschritte S1 bis S4 zeitgleich ausgeführt.

Es versteht sich, dass andere Ausführungsformen benutzt und strukturelle oder logische Änderungen vorgenommen werden können, ohne von dem Schutzumfang der vorliegenden Erfindung abzuweichen. So können Merkmale der hierin beschriebenen Ausführungsbeispiels miteinander kombiniert werden, sofern nicht spezifisch anders angegeben. Die Beschreibung des Ausführungsbeispiels ist deshalb nicht in einschränkendem Sinne aufzufassen, und der Schutzumfang der vorliegenden Erfindung wird durch die angefügten Ansprüche definiert.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Ausdrücklich wird darauf hingewiesen, dass der Einfachheit halber und zum einfacheren Verständnis der Einrichtungen und Bauteile der erfindungsgemäß angegebenen und beanspruchten Anordnung diese zumeist als Einzelbauteile benannt sind. Je nach den individuell vorliegenden Gegebenheiten können für die gleiche Funktion auch mehrere entsprechende Einrichtungen bzw. Bauteile hintereinander oder parallel, beispielsweise zwei Elektrolyseeinrichtungen, zwei regenerative Stromerzeugungseinrichtungen etc. verwendet werden. Auch solche mehrteiligen Anordnungen sollen von den Ansprüchen und der Beschreibung ausdrücklich mit umfasst sein.

## Patentansprüche

1. Anordnung (1) zur umweltfreundlichen Erzeugung von Wasserstoff (2), die Anordnung (1) aufweisend:
- eine Elektrolyseeinrichtung (4), ausgebildet zur Erzeugung von Wasserstoff (2) mittels Elektrolyse von Wasser (5),
- einen Kühlmediumkreislauf (6), ausgebildet zur Kühlung der Elektrolyseeinrichtung (4), und
- eine Hochtemperaturwärmepumpe (7), ausgebildet zur Aufnahme von Wärmeenergie von einem im Kühlmediumkreislauf (6) strömenden Kühlmedium (8a, 8b) und Abgabe von Wärmeenergie an ein Heizmedium (9a, 9b).

2. Anordnung (1) nach Anspruch 1, wobei die Elektrolyseeinrichtung (4) als Niederdruck-Protonen-Austausch-Elektrolyseeinrichtung ausgebildet ist.

3. Anordnung (1) nach einem der vorstehenden Ansprüche, aufweisend:
- eine regenerative Stromerzeugungseinrichtung (10), ausgebildet zur Versorgung der Elektrolyseeinrichtung (4) mit regenerativer elektrischer Energie (11).

4. Anordnung (1) nach Anspruch 3, wobei die regenerative Stromerzeugungseinrichtung (10) zur Versorgung der Hochtemperaturwärmepumpe (7) mit regenerativer elektrischer Energie (11) ausgebildet ist.

5. Anordnung (1) nach einem der vorstehenden Ansprüche, aufweisend:
- eine Wasserentsalzungseinrichtung (12), ausgebildet zur Bereitstellung von Süßwasser (14, 14a, 14b) durch Entsalzung von salzhaltigem Wasser (13) unter Energiezufuhr mittels des erwärmten Heizmediums (9a).

6. Anordnung (1) nach Anspruch 5, wobei das Süßwasser (14, 14a, 14b) zumindest teilweise der Elektrolyseeinrichtung (4) für die Elektrolyse von Wasser zuführbar ist.

7. Verfahren (100) zur umweltfreundlichen Erzeugung von Wasserstoff (2), das Verfahren (100) aufweisend:
- S1: Erzeugen von Wasserstoff (2) mittels Elektrolyse von Wasser (5),
- S2: Erwärmen eines Kühlmediums (8b) mittels bei der Elektrolyse abgegebener Wärmeenergie und
- S3: Erwärmen eines Heizmediums (9b) auf eine Temperatur oberhalb der Temperatur des erwärmten Kühlmediums (8a) mittels Energieübertragung vom erwärmten Kühlmedium (8a) auf das Heizmedium (9b).

8. Verfahren (100) nach Anspruch 7, wobei für die Elektrolyse regenerative elektrische Energie (11) verwendet wird.

9. Verfahren (100) nach Anspruch 7 oder 8, aufweisend:
- S4: Bereitstellen von Süßwasser (14, 14a, 14b) durch Entsalzen von salzhaltigem Wasser (13) unter Energiezufuhr mittels des erwärmten Heizmediums (9a).

10. Verfahren (100) nach Anspruch 9, wobei das bereitgestellte Süßwasser (14, 14a, 14b) zumindest teilweise für das Erzeugen von Wasserstoff (2) mittels Elektrolyse von Wasser (5) verwendet wird.
